Europäisches Patentamt

(19) European Patent Office

Office européen des brevets

(11) Publication number: **0 258 957 B1**

(12) **EUROPEAN PATENT SPECIFICATION**

(45) Date of publication of patent specification: **08.07.92**    (51) Int. Cl.⁵: **A23P 1/08**, A23L 1/31, A23L 1/325

(21) Application number: **87303283.3**

(22) Date of filing: **14.04.87**

(54) **Method for making a sauce coated food under a batter or batter and breaded coating.**

(30) Priority: **22.08.86 US 899097**

(43) Date of publication of application:
**09.03.88 Bulletin 88/10**

(45) Publication of the grant of the patent:
**08.07.92 Bulletin 92/28**

(84) Designated Contracting States:
**AT BE CH DE ES FR GB GR IT LI LU NL SE**

(56) References cited:
**FR-A- 2 158 323**
**GB-A- 1 367 566**
**GB-A- 1 573 041**
**US-A- 3 653 924**

(73) Proprietor: **DCA Food Industries, Inc.**
**919 Third Avenue**
**New York New York 10022(US)**

(72) Inventor: **Hurni, Richard J.**
**2055 Wakefield Lake Road**
**Glencoe Missouri 63038(US)**

(74) Representative: **Adams, William Gordon et al**
**RAWORTH, MOSS & COOK 36 Sydenham**
**Road**
**Croydon Surrey CR0 2EF(GB)**

## Description

This invention relates to edible products and a method of manufacturing such products. More particularly, this invention relates to a method of manufacturing fried or baked food products having a conventional outer batter or breading coating and a novel sauce layer disposed beneath the outer coating at the interface between the coating and the underlying food substrate.

It is conventional in the preparation of fried or baked food stuffs, such as meat, poultry, vegetable, fruit or cheese, to preliminarily coat a food substrate with a liquid batter and/or breading material which forms a crisp outer coating around the substrate when it is cooked, usually by frying or baking. In the mass production of such products it is typical to pre-fry the coated food product in order to at least partially set the outer coating prior to freezing and packaging the product for shipment. The ultimate consumer will further bake, fry or otherwise reheat the food product prior to consumption.

It is well known to those skilled in the art that the typical food substrate releases moisture when subjected to the elevated temperatures associated with cooking and that such moisture usually becomes entrapped at the interface between the surface of the food substrate and the outer pre-fried batter or breading coating. This entrapped moisture causes the inner surface of the outer coating to become soggy and give the impression (both visually and in eating texture) that the coating has been incompletely cooked. Moreover, the moisture remains with the product and is a significant cause of the sogginess of the outer coating which many consumers associate with the typical pre-fried, reheatable coated food product which is sold in supermarkets.

Wholly apart from the foregoing, the consumer's increasing desired for flavorful prepared convenience foods has created a demand for food products having garnishments and sauces which are typical of homemade foods. The provision of a sauce or wet coating on the surface of a food product complicates the manufacturing process due to the potential for loss of the coating, and fouling of manufacturing equipment. It also results in products which are more difficult for "fast food" restaurants to reheat and serve.

It is an object of the present invention to provide an improved process for the preparation of batter or batter and breading coated food products which overcomes the undesirable sogginess associated with existing fried food products and results in a food product which incorporates a desirable sauce.

Yet another object of this invention is to take advantage of the otherwise undesirable moisture which is released at the surface of the underlying food substrate to produce an in situ sauce of any desired flavor.

It is a still further object of the present invention to provide an improved process of producing a sauce coated food product which will work with a large variety of food substrates such as meat, fish, vegetables, cheese, poultry, or shaped products made from comminuted food particles.

It is a still further object of the present invention to provide an improved process of making a sauce coated food product which is both economical to practice and compatible with conventional, commercially available equipment.

It has now been discovered that novel food products which contain a sauce of practically any desired flavor can be prepared by taking advantage of the normally undesired moisture which is produced at the surface of a substrate when it is cooked. More specifically, the present invention resides in the discovery of a novel method for producing a sauce in situ at the interface between an underlying food substrate and an overlying batter or batter and breading coating using the normally undesirable moisture released by the food substrate during cooking as the liquid to make the sauce.

The method of forming a coated food product having a sauce layer comprises coating a moist food substrate with a dry composition which is capable of absorbing moisture during cooking to form a sauce at the surface of the substrate, thereafter applying a conventional batter coating or batter and breading coatings in accordance with conventional techniques, and cooking the thus coated food product. Upon applying cooking heat to the foregoing product, moisture will be released at the surface of the food substrate and that moisture will be absorbed by the dry coating to produce a sauce which resides beneath the outer batter or breading coating. The resulting product has the physical appearance and handling characteristics of a conventional fried or baked food product having a farinaceous outer coating but provides the taste and textures of a desirable sauce when bitten into by the consumer.

The presence of a flavorful sauce substantially masks the undesirable soggy texture associated with the typical fried coated when no sauce is present. In effect, the undesirable characteristic is converted to a highly desirable characteristic, namely a moist sauce layer which is completely contained beneath the outer surface of the food product until it is eaten.

Although the process of the present invention may be used in conjunction with a wide variety of food substrates such as meat, fish, vegetables, cheese, poultry or shaped products made from comminuted particles of the foregoing foods, some degree of moisture is required on the surface substrate in order to cause the dry composition to initially adhere to the surface of the food substrate. Sufficient moisture is typically present on the surface of such food substrate as meat, fish, and poultry; however, there may be insufficient surface moisture on such food substrates as cheese or vegetables. In such case, prior to coating the food substrate with the dry composition, the surface of the food substrate can be moistened by spraying or dipping. Only enough moisture need be added to the surface of the food substrate to cause the dry composition to adhere to the surface of the food substrate. The added moisture is not required for the formation of the in situ sauce at the interface between the surface of the food substrate and the batter coating layer. Only the moisture released from the food substrate during the cooking operation produces the sauce.

After the food substrate is coated with the dry composition and battered and, if desired, breaded, with an outer starch containing comestible coating, the product is partially or fully cooked by frying, baking or other cooking process. The cooking process causes the starch in the batter to gelatinize thereby forming a continuous coating. Simultaneously, the moisture released from the food substrate combines with the dry composition on the surface of the substrate thereby forming a sauce in situ. The continuous outer coating retains the sauce at the interface of the food substrate and the outer coating.

By varying the ingredients and flavorings in the dry composition, it is possible to provide a sauce of many desirable flavors such as a barbecue sauce for use in conjunction with a chicken food substrate, a lemon-butter sauce to be used in conjunction with a fish food substrate, a glaze to be used in conjunction with a ham substrate, a cheese sauce to be used in conjunction with a vegetable substrate and so forth.

The make-up of the dry composition is not critical and may vary according to the flavor desired. The dry coating is formed preferably from a combination of a gum, maltodextrin, food starch, sugar or dextrose, salt, monosodium glutamate, vegetable shortening, anti-caking agents, corn flour, sodium polyphosphate and the flavors, spices and colors required to give the sauce the appropriate flavor.

The gum usable in the present invention may be selected from the group consisting of guar gum, carboxymethyl cellulose or xanthan; however carboxymethyl cellulose is preferred. The maltodextrin utilized in the present invention includes Maltrin 100, Maltrin 500 or other hydrolized starch products although Maltrin 500 is preferred.

The starchy materials utilized in the present invention include wheat flour, corn flour and Rezista starch, although most flours and modified starches or starches could be usable. It has been found that Rezista or corn starch or corn flour are preferred as the starchy material.

Fine granulated sugar is the preferred form of the sugar although other granulations are usable. Likewise powdered dextrose is preferred although other granulations are usable. the salt should be a fine granulation while the form of the monosodium glutamate is not critical.

The vegetable shortenings preferably used in the present invention include soy bean oil or Kaorich beads, although other oils and other beaded shortenings have been found to be suitable. An anti-caking agent such as silicon dioxide, sold under the brand name Sibernet 50 or Syloid 244 is preferred although this ingredient is optional. Other optional ingredients include corn flour and sodium polyphosphate. Additionally, the particular spices, flavorings or colorings used will depend on the desired flavor of the sauce.

Typical ingredients in the dry composition would include the following materials, the weight percent amounts given with each material representing the broad range and the preferred amounts of material:

| Ingredient | Preferred (Weight Percent) | Broad Range (Weight Percent) |
|---|---|---|
| Gum | 4-6 | 2-7 |
| Maltodextrin | 9-20 | 5-25 |
| Food Starch | 10-20 | 10-40 |
| Sugar/dextrose | 24-65 | 0-70 |
| Salt | 1-9 | 0-10 |
| Monosodium Glutamate | 3-7 | 1-14.5 |
| Vegetable Shortening | 0.5-5 | 0.5-10 |
| Anticaking agents (Optional) | 0-1 | 0-2 |
| Corn Flour (Optional) | 0-10 | 0-10 |
| Sodium Polyphosphate (Optional) | 0-2 | 0-5 |
| Flour, Spices and Color | balance of formulation to characterize the product. | |

The dry composition is a mixture of the ingredients within the range set forth above which contains no added water or other liquid. The liquid is supplied by the moisture released by the food substrate during the cooking operation.

The following is a specific example of a dry composition which is used to produce a lemon-butter and wine flavored sauce at the interface between the food substrate and the batter or batter and breading coating layer:

4

## EXAMPLE I

| Ingredient | Weight Percent |
|---|---|
| Dextrose | 24.81% |
| Food Starch - Modified | 17.56 |
| Maltodextrin | 16.51 |
| Natural Lemon, Butter and Wine Flavors and Artificial Lemon Flavor | 12.05 |
| Salt | 8.05 |
| Monosodium Glutamate | 7.16 |
| Yellow Corn Flour | 7.00 |
| Cellulose Gum | 5.40 |
| Spice (Mustard Flavor) | 0.54 |
| Soybean Oil | 0.50 |
| Silicon Dioxide | 0.20 |
| Oleo Resin Turmeric | 0.08 |
| Oleo Resin Paprika | 0.04 |
| TOTAL | 100.00% |

This particular formulation is particularly suitable for use in conjunction with a food substrate such as fish. The following is a specific example of a dry composition for producing a barbecue favored sauce:

EP 0 258 957 B1

## EXAMPLE II

| Ingredient | Weight Percent |
|---|---|
| Sugar | 27.00% |
| Food Starch - Modified | 17.75 |
| Maltodextrin | 15.20 |
| Salt | 8.83 |
| Tomato Powder | 8.10 |
| Monosodium Glutamate | 5.83 |
| Cellulose Gum | 5.40 |
| Partially Hydrogenated Vegetable Oil | 5.25 |
| Sodium Tripolyphosphate | 2.00 |
| Oleo Resin Paprika | 1.17 |
| Beet Powder | 0.97 |
| Natural Smoke Flavor | 0.80 |
| Garlic Powder | 0.80 |
| Spices (Cloves, Allspice, and Cinnamon) | 0.65 |
| Silicon Dioxide | 0.25 |
| **TOTAL** | **100.00%** |

The above formulation is particularly suitable for use in conjunction with a food product such as chicken, pork and other meats.

The following is a specific example of a dry composition used for producing an orange flavored sauce:

6

## EXAMPLE III

| Ingredient | Weight Percent |
|---|---|
| Sugar | 63.74% |
| Food Starch - Modified | 11.30 |
| Maltodextrin | 9.30 |
| Cellulose Gum | 4.00 |
| Monosodium Glutamate | 3.75 |
| Citric Acid | 3.00 |
| Soybean Oil | 1.50 |
| Natural and Artificial Orange Flavor | 1.20 |
| Beta Carotene | 1.10 |
| Salt | 1.00 |
| Silicon Dioxide | 0.10 |
| Oleo Resin Turmeric | 0.01 |
| TOTAL | 100.00% |

This particular formulation is particularly suitable for use with chicken.

Each of the above formulations can also be used in conjunction with vegetables, cheeses or shaped food products made from comminuted food particles as long as such food substrates release water during the cooking process.

The method of forming a coated food product having a sauce layer at the interface between the food substrate and a batter or breading coating of the present invention is practiced on conventional, commercially available batter or batter breader machines such as the Stein Model E-14. The cube, nugget or piece of a food substrate is placed on the input conveyor of the batter and breading applicator. Next, the dry composition, made in accordance with the above formulation, is applied to the food substrate in the conventional manner. The food substrate coated with the dry composition continues through the batter breader machine where a coating of batter is added to the food product and, if desired, a layer of breading is then added above the batter. Next, the fully coated product is cooked in a conventional manner such as by frying in hot oil at = 176.6° -204.4° C (350 to 400 degrees Fahrenheit) for an appropriate length of time depending upon the type of food substrate and the extent of cooking desired. During this cooking operation, moisture released from the food substrate mixes with the dry composition causing the sauce to be formed in situ at the interface between the food substrate and the batter layer.

Normally, the food substrate has a sufficiently moist surface to cause the dry composition to adhere to the food substrate. However, since the present invention is also adapted for use in conjunction with food substrates having dry surfaces, an additional operation can be performed in the case of food substrates made from cheese, dry vegetables and the like. Specifically, food substrates having a dry surface are dipped or sprayed with only a sufficient amount of water to cause the dry composition to adhere to the surface of the food substrate. This addition of surface moisture is not otherwise required for the in situ sauce formation.

The food can be fully cooked in one operation, can be partially cooked, frozen, and finish cooked after defrosting, or may even be coated with the dry composition and batter or batter and breaded and thereafter frozen and first cooked after freezing. The first cooking operation causes the release of moisture from the food product and the formation of the in situ sauce.

The products made in accordance with the method of the present invention are particularly well suited for pre-prepared foods which are coated, partially cooked or fully cooked and merely rewarmed for consumption. Such product has been found to have excellent freeze and thaw stability. Thus the food products made in accordance with the method of the present invention are particularly well suited for use by "fast food" restaurants.

Having described the general nature as well as some specific formulations for use in practicing the method of the present invention the true scope of the invention will now be pointed out in the appended claims.

## Claims

1. A method of forming a coated food product having a sauce layer at the interface between a food substrate and an outer, cooked starch-containing comestible coating which comprises providing a food substrate having a moist outer surface, coating said substrate with a dry composition which remains dry, said dry composition being capable of absorbing moisture to form a sauce at the interface between said substrate and an outer starch-containing comestible coating, applying a starch-containing batter or batter and breading over said dry composition, and cooking the thus coated food substrate under conditions which cause moisture to be released from said substrate and to combine with said dry composition and form a sauce at the interface between said substrate and the outer cooked batter or batter and breading coating.

2. The method of Claim 1 wherein a layer of breading is applied over the starch-containing comestible coating on the food product prior to cooking.

3. The method of Claim 1 or 2 wherein said dry composition comprises 2-7 weight percent gum, 5-25 weight percent maltodextrin, 10-40 weight percent food starch, 0-70 weight percent sugar, 0-10 weight percent salt, 1-14.5 weight percent monosodium glutamate, 0.5-10 weight percent vegetable shortening and flavorings.

4. The method of Claim 1, 2 or 3 wherein said food substrate is selected from the group consisting of meat, poultry, seafood, cheese, fruits or vegetables in natural form or in a shaped form produced from comminuted food particles.

5. A method of forming a coated food product having a sauce layer at the interface between a food substrate and an outer cooked starch-containing comestible coating which comprises providing a food substrate, moistening the outer surface of said outer food substrate with sufficient quantity of moisture to cause a dry composition to adhere to said outer surface but insufficient to cause a dry composition to change its form from a dry composition, coating said moistened outer surface of said substrate with a dry composition which remains dry, said dry composition being capable of absorbing moisture to form a sauce at the interface between said substrate and an outer starch-containing comestible coating, applying a starch-containing batter or batter and breading over said composition, and cooking the thus coated food substrate under conditions which cause moisture to be released from said substrate to combine with said dry composition and to form a sauce at the interface between said substrate and the outer cooked batter or batter and breading coating.

6. A method of forming a coated food product having a sauce layer at the interface between a food substrate and an outer cooked starch-containing comestible coating which comprises providing a food substrate selected from the group consisting of meat, poultry, seafood, cheese, fruits or vegetables in natural form or in shaped form produced from comminuted food particles wherein said food substrate has a moist outer surface, coating said substrate with a dry composition which remains dry comprising 2-7 weight percent gum, 5-25 weight percent maltodextrin, 10-40 weight food starch, 0-70 weight percent sugar, 0-10 weight percent salt, 1-14.5 weight percent monosodium glutamate, 0.5-10 weight percent vegetable shortening and flavorings, said dry composition being capable of absorbing moisture to form a sauce at the interface between said substrate and an outer starch-containing comestible coating, applying a starch-containing batter or batter and breading over said dry composition, and cooking the thus coated food substrate under conditions which cause moisture from said substrate to combine with said dry composition and form a sauce between said substrate and the outer cooked

8

batter or batter and breading coating.

**Revendications**

1.  Procédé de préparation d'un produit alimentaire enrobé comportant une couche de sauce à l'interface entre un substrat alimentaire et un revêtement comestible cuit contenant de l'amidon qui consiste à partir d'un substrat alimentaire comportant une surface extérieure humide, à recouvrir ledit substrat d'une composition sèche qui demeure sèche, ladite composition sèche étant capable d'absorber de l'humidité pour former une sauce à l'interface entre ledit substrat et un revêtement extérieur comestible cuit contenant de l'amidon, à appliquer une pâte contenant de l'amidon, ou une pâte et de la panure sur ladite composition sèche et à cuire le substrat alimentaire ainsi revêtu dans des conditions qui provoquent une libération de l'humidité dudit substrat qui se combine avec ladite composition sèche pour former une sauce à l'interface entre ledit substrat et le revêtement extérieur cuit de pâte ou de pâte et de panure.

2.  Procédé selon la revendication 1 dans lequel une couche de panure est appliquée sur la couche comestible contenant de l'amidon sur le produit alimentaire avant la cuisson.

3.  Procédé selon la revendication 1 ou 2 dans lequel ladite composition sèche contient 2-7 % en poids de gomme, 5 à 25 % en poids de maltodextrine, 10 à 40 % en poids d'amidon alimentaire, 0 à 70 % en poids de sucre, 0 à 10 % en poids de sel, 1 à 14,5 % en poids de glutamate monosodique, 0,5 à 10 % en poids de matières aromatiques et matières grasses végétales.

4.  Procédé selon la revendication 1, 2 ou 3 dans lequel ledit substrat alimentaire est choisi dans le groupe comprenant la viande, la volaille, les fruits de mer, le fromage, les fruits ou les légumes sous forme naturelle ou sous une forme élaborée produite à partir de particules d'éléments réduits en morceaux.

5.  Procédé de préparation d'un produit alimentaire enrobé comportant une couche de sauce à l'interface entre un substrat alimentaire et un revêtement comestible extérieur cuit contenant de l'amidon qui consiste à partir d'un substrat alimentaire, à humidifier la surface extérieure dudit substrat alimentaire extérieur avec une proportion suffisante d'humidité pour provoquer l'adhérence d'une composition sèche sur ladite surface extérieure mais insuffisante pour amener une composition sèche à modifier sa forme à partir d'une composition sèche, à recouvrir ladite surface extérieure humidifiée dudit substrat d'une composition sèche qui demeure sèche, ladite composition sèche étant capable d'absorber de l'humidité pour former une sauce à l'interface entre ledit substrat et un revêtement extérieur comestible contenant de l'amidon, à appliquer une pâte contenant de l'amidon ou une pâte et une panure sur ladite composition et à cuire le substrat alimentaire ainsi revêtu dans des conditions qui provoquent la libération de l'humidité du substrat qui se combine avec ladite composition sèche en formant une sauce à l'interface entre ledit substrat et le revêtement extérieur cuit de pâte ou de pâte et de panure.

6.  Procédé de préparation d'un produit alimentaire enrobé comportant une couche de sauce à l'interface entre un substrat alimentaire et une couche extérieure comestible cuite contenant de l'amidon, qui consiste à partir d'un substrat alimentaire choisi dans le groupe qui comprend la viande, la volaille, les fruits de mer, le fromage, les fruits ou les légumes sous forme naturelle ou sous forme élaborée produite à partir de particules d'aliments réduits en morceaux dans lequel ledit substrat présente une couche extérieure humide, à recouvrir ledit substrat d'une composition sèche qui reste sèche, comprenant 2-7 % en poids de gomme, 5-25 % en poids de maltodextrine, 10-40 % en poids d'amidon alimentaire, 0-70 % en poids de sucre, 0-10 % en poids de sel, 1-14,5 % en poids de glutamate monosodique, 0,5-10 % en poids de matières aromatiques et de matières grasses végétales, ladite composition sèche étant capable d'absorber l'humidité pour former une sauce à l'interface entre ledit substrat et un revêtement extérieur comestible contenant de l'amidon, à appliquer une pâte contenant de l'amidon ou une pâte et une panure sur ladite composition sèche et à cuire le substrat comestible ainsi recouvert dans des conditions qui amènent l'humidité dudit substrat à se combiner avec ladite composition sèche pour former une sauce entre ledit substrat et le revêtement extérieur cuit de pâte ou de pâte et de panure.

**Patentansprüche**

EP 0 258 957 B1

1. Verfahren zum Herstellen eines beschichteten Lebensmittelproduktes mit einer Soßenschicht an der Grenzfläche zwischen einem Lebensmittelsubstrat und einer äußeren gekochten stärkehaltigen eßbaren Beschichtung, das das Vorsehen eines Lebensmittelsubstrates mit einer feuchten Außenfläche, das Überziehen des Substrates mit einer trockenen Zusammensetzung, die trocken bleibt, wobei die trockene Zusammensetzung unter Bildung einer Soße an der Grenzfläche zwischen dem Substrat und einer äußeren stärkehaltigen eßbaren Beschichtung Feuchtigkeit absorbieren kann, das Aufbringen eines stärkehaltigen Teiges oder von Teig und Panier über der trockenen Zusammensetzung und das Kochen des so beschichteten Lebensmittelsubstrates unter Bedingungen, die bewirken, daß Feuchtigkeit vom Substrat freigesetzt wird und sich mit der trockenen Zusammensetzung vereinigt und eine Soße an der Grenzfläche zwischen dem Substrat und der äußeren gekochten Teig- oder Teig- und Panierbeschichtung gebildet wird, umfaßt.

2. Verfahren nach Anspruch 1, in dem eine Panierschicht über der stärkehaltigen eßbaren Beschichtung auf dem Lebensmittelprodukt vor dem Kochen aufgebracht wird.

3. Verfahren nach Anspruch 1 oder 2, in dem die trockene Zusammensetzung 2 bis 7 Gew.% Gummi, 5 bis 25 Gew.% Maltodextrin, 10 bis 40 Gew.% Lebensmittelstärke, 0 bis 70 Gew.% Zucker, 0 bis 10 Gew.% Salz, 1 bis 14,5 Gew.% Mononatriumglutamat, 0,5 bis 10 Gew.% Pflanzenbackfett und Geschmacksstoffe umfaßt.

4. Verfahren nach Anspruch 1, 2 oder 3, in dem das Lebensmittelsubstrat ausgewählt ist aus der Gruppe bestehend aus Fleisch, Geflügel, Meerestieren, Käse, Obst oder Gemüse in natürlicher Form oder in einer geformten Form, hergestellt aus zerkleinerten Lebensmittelteilchen.

5. Verfahren zum Herstellen eines beschichteten Lebensmittelproduktes mit einer Soßenschicht an der Grenzfläche zwischen einem Lebensmittelsubstrat und einer äußeren gekochten stärkehaltigen eßbaren Beschichtung, das das Vorsehen eines Lebensmittelsubstrates, das Anfeuchten der Außenfläche des Lebensmittelsubstrates mit einer Menge Feuchtigkeit, die ausreichend ist, das Haften einer trockenen Zusammensetzung an der Außenfläche zu bewirken, jedoch nicht ausreichend ist, zu bewirken, daß eine trockene Zusammensetzung ihre Form von einer trockenen Zusammensetzung ändert, das Überziehen der befeuchteten Außenfläche des Substrates mit einer trockenen Zusammensetzung, die trocken bleibt, wobei die trockene Zusammensetzung unter Bildung einer Soße an der Grenzfläche zwischen dem Substrat und einer äußeren stärkehaltigen eßbaren Beschichtung Feuchtigkeit absorbieren kann, das Aufbringen eines stärkehaltigen Teiges oder von Teig und Panier über der trockenen Zusammensetzung und das Kochen des so beschichteten Lebensmittelsubstrats unter Bedingungen, die bewirken, daß Feuchtigkeit vom Substrat freigesetzt wird und sich mit der trockenen Zusammensetzung vereinigt und eine Soße an der Grenzfläche zwischen dem Substrat und der äußeren gekochten Teig- oder Teig- und Panierbeschichtung gebildet wird, umfaßt.

6. Verfahren zum Herstellen eines beschichteten Lebensmittelproduktes mit einer Soßenschicht an der Grenzfläche zwischen einem Lebensmittelsubstrat und einer äußeren gekochten stärkehaltigen eßbaren Beschichtung, das das Vorsehen eines Lebensmittelsubstrates ausgewählt aus der Gruppe bestehend aus Fleisch, Geflügel, Meerestieren, Käse, Obst oder Gemüse in natürlicher Form oder in geformter Form, hergestellt aus zerkleinerten Lebensmittelteilchen, wobei das Lebensmittelsubstrat eine feuchte Außenfläche aufweist, das Überziehen des Substrates mit einer trockenen Zusammensetzung, die trocken bleibt und 2 bis 7 Gew.% Gummi, 5 bis 25 Gew.% Maltodextrin, 10 bis 40 Gew.% Lebensmittelstärke, 0 bis 70 Gew.% Zucker, 0 bis 10 Gew.% Salz, 1 bis 14,5 Gew.% Mononatriumglutamat, 0,5 bis 10 Gew.% Pflanzenbackfett und Geschmacksstoffe umfaßt, wobei die Zusammensetzung unter Bildung einer Soße an der Grenzfläche zwischen Substrat und einer äußeren stärkehaltigen eßbaren Beschichtung Feuchtigkeit absorbieren kann, das Aufbringen eines stärkehaltigen Teiges oder von Teig und Panier über der trockenen Zusammensetzung und das Kochen des so beschichteten Lebensmittelsubstrates unter Bedingungen, die bewirken, daß sich Feuchtigkeit vom Substrat mit der trockenen Zusammensetzung vereinigt und zwischen Substrat und der äußeren gekochten Teig- oder Teig- und Panierbeschichtung eine Soße gebildet wird, umfaßt.

10